# EUROPÄISCHE PATENTSCHRIFT

(11) **EP 1 890 269 B1**
(45) Veröffentlichungstag und Bekanntmachung des Hinweises auf die Patenterteilung: **04.01.2012**
(21) Anmeldenummer: 07014168.4
(22) Anmeldetag: 19.07.2007
(51) Int. Cl.: G07F 1/00, G06F 21/00

(54) **Bereitstellen einer Funktion eines Sicherheitstokens**
Provision of a function of a security token
Mise à disposition d'une fonction d'un mécanisme de sécurité

(30) Priorität: 10.08.2006 DE 102006037473
(43) Veröffentlichungstag der Anmeldung: 20.02.2008
(73) Patentinhaber: Giesecke & Devrient GmbH, 81677 München (DE)
(72) Erfinder: Walter, Hinz, Dr., 85748 Garching (DE); Spitz, Stephan, Dr., 81247 München (DE)

(56) Entgegenhaltungen:
- WO-A-01/93212
- WO-A-98/07092
- US-A1- 2002 099 634
- US-A1- 2004 117 318
- US-A1- 2006 085 848

## Beschreibung

Die Erfindung betrifft allgemein das Gebiet der Sicherheitstoken und spezieller das Gebiet des Bereitstellens einer Funktion eines Sicherheitstokens auf einem Host-System. Ein Sicherheitstoken in der Wortwahl des vorliegenden Dokuments kann beispielsweise eine Chipkarte in unterschiedlichen Ausgestaltungen oder ein Chipmodul - z.B. in Form eines USB-Steckers - sein. Ein Host-System in der Wortwahl des vorliegenden Dokuments ist generell jedes Gerät, das die Funktion des Sicherheitstokens nutzt.

Bei mobilen Telekommunikationsgeräten - z.B. Mobiltelefonen - werden in der Regel SIM- oder USIM-Karten als Sicherheitstoken verwendet. Diese Karten befinden sich dauerhaft im Telekommunikationsgerät und werden während der gesamten Betriebszeit des Telekommunikationsgerätes von diesem mit Strom versorgt. Gerade bei kompakten Telekommunikationsgeräten wäre es wünschenswert, den von der Karte benötigten Platz auch anderweitig nutzen zu können. Ferner ist es wünschenswert, den Strombedarf des Telekommunikationsgerätes so gering wie möglich zu halten. Entsprechende Probleme bestehen bei anderen portablen Sicherheitssystemen, die Chipkarten oder andere Sicherheitstoken verwenden.

Ein weiterer Anwendungsbereich von Sicherheitstoken sind Zugangsberechtigungssysteme für verschlüsselte Mediendaten, z.B. Decoder für Pay-TV-Programme. Derartige Systeme weisen oftmals mehrere Steckplätze für Chipkarten mehrerer Anbieter von Pay-TV-Programmen auf. Jeder Steckplatz verursacht jedoch Kosten, so dass es wünschenswert wäre, auch mit nur einem Steckplatz hohen Benutzerkomfort bereitstellen zu können.

Ferner werden Sicherheitstoken in zunehmendem Maße für die Zwei-Faktor-Authentisierung bei sicherheitskritischen Anwendungen verwendet; das Host-System ist in diesem Fall ein üblicher Computer oder ein eingebettetes System. Auch hier besteht ein Bedürfnis, mit möglichst geringem Aufwand eine möglichst hohe Benutzerfreundlichkeit zu erreichen.

US 2002/ 0080190 A1 zeigt ein System zum Anlegen und Verwalten von "virtuellen Chipkarten". Ein Steuerprogramm liest die in einer physischen Chipkarte enthaltenen Daten aus und speichert sie z.B. auf einer Festplatte oder einer CD-ROM. Die gespeicherten Daten können zur Sicherung und schnellen Wiederherstellung von Chipkarten verwendet oder mittels des Steuerprogramms bearbeitet werden. Das Steuerprogramm kann ferner die Funktionen der Chipkarte für Anwendungsprogramme bereitstellen, wenn die Chipkarte beschädigt wurde oder verloren gegangen ist.

Aus WO 03/052565 A1 ist eine Computervorrichtung bekannt, die ein physisches Sicherheitstoken und einen geschützten Speicherbereich mit einem virtuellen Sicherheitstoken aufweist. Das physische Token wird verwendet, um einen Berechtigungsnachweis (*credential*) für das virtuelle Token zu erhalten.

WO 2004/021715 A2 offenbart ein Verfahren, um eine einzige SIM-Karte gleichzeitig in einem Mobiltelefon und durch einen persönlichen Computer zu nutzen. Die SIM-Karte befindet sich im Mobiltelefon. Anfragen an die SIM-Karte, die von dem Computer ausgehen, werden über eine Bluetooth®-Schnittstelle an das Mobiltelefon gesendet und dort von der SIM-Karte beantwortet. Die Antwort wird über die Bluetooth-Schnittstelle zum Computer übertragen.

US 2004/0072591 A1 zeigt eine Vorrichtung zur Prüfung des Zugangs zu Mobiltelefonnetzen, bei der mehrere reale SIM-Karten unterschiedlicher Dienstanbieter in einer Zentraleinheit angeordnet sind. Mobile Testgeräte greifen auf diese SIM-Karten zu. Hierbei senden die Testgeräte Authentisierungsanfragen an die SIM-Karten und erhalten die von den SIM-Karten erzeugten Antworten.

Aus US 2005/0227729 A1 ist ein Mobiltelefon bekannt, das zur Verwendung durch mehrere Benutzer vorgesehen ist. An das Mobiltelefon ist eine Speicherkarte mit persönlichen Daten wie z.B. einem Telefonbuch, E-Mail-Daten oder Einstellungsdaten anschließbar. Wenn ein Benutzer sich bei dem Mobiltelefon anmeldet, werden die Daten von der Speicherkarte in das Mobiltelefon übertragen, und wenn der Benutzer sich abmeldet, werden die Daten in die Speicherkarte zurück übertragen.

US 2002/0099634 A1 zeigt ein Transaktionssystem mit einem Server und mehreren Terminals, die jeweils eine Vielzahl von Peripherieeinheiten aufweisen, wobei der Server Applikationen und Treiber für die Peripherieeinheiten bereitstellt.

US 2004/0117318 A1 schlägt vor einen tragbaren Datenträger so einzurichten, dass ein Computer ohne den Datenträger einen vertrauenswürdigen Bereich des Computers nicht starten kann.

Ein Verfahren zum Aufbau eines sicheren Kanals zwischen Chipkarte und Kartenleser ist in US 2006/0085848 A1 beschrieben.

WO 01/93212 A2 zeigt eine virtuelle Chipkarte auf einem Computer, welche über die Kartenleser-Schnittstelle des Computers mit dem Computer kommuniziert, also für Anwendungen wie eine physisch vorhandene Chipkarte zu bedienen ist.

In WO 98/07092 A1 wird für einen Computer eine zusätzliche Sicherheitseinheit mit Kartenleser und mehreren Schnittstellen zu

Computern vorgesehen, welche aus mehreren Chipkarten die nötigen Daten ausliest, um für den Computer virtuell die Funktionen dieser Chipkarten bereitzustellen.

Die Erfindung hat die Aufgabe, eine Technik bereitzustellen, die hohe Sicherheit bietet und dabei Probleme, die sich bei der Verwendung von Sicherheitstoken nach dem Stand der Technik ergeben, vermeidet. In manchen Ausgestaltungen soll die Erfindung dazu beitragen, Geräte mit besonders geringem Stromverbrauch und/oder besonders kompakte Geräte und/ oder besonders kostengünstige Geräte und/ oder besonders bequem zu bedienende Geräte bereitzustellen.

Erfindungsgemäß wird diese Aufgabe ganz oder zum Teil gelöst durch ein Verfahren mit den Merkmalen des Anspruchs 1 und ein Host-System mit den Merkmalen des Anspruchs 12. Die abhängigen Ansprüche definieren optionale Merkmale mancher Ausgestaltungen der Erfindung.

Die Erfindung geht von der Grundidee aus, einen Virtualisierungsvorgang auszuführen, bei dem unter Zugriff auf ein physisches Sicherheitstoken ein virtuelles Sicherheitstoken in einem gesicherten Bereich des Host-Systems angelegt wird. Nach Abschluss des Virtualisierungsvorgangs stellt das virtuelle Sicherheitstoken mindestens eine Funktion des physischen Sicherheitstokens bereit. Das physische Sicherheitstoken wird dann in den meisten Ausgestaltungen nicht mehr benötigt und kann z.B. abgeschaltet und/oder entfernt werden.

Durch die Verwendung eines kryptographisch gesicherten Kommunikationskanals für die Datenübertragung und eines gesicherten Bereichs zum Anlegen des virtuellen Sicherheitstokens schafft die Erfindung die technischen Grundlagen, um geheime Daten, die im physischen Sicherheitstoken enthalten sind, auch während der Übertragung in das Host-System und während der Verwendung des virtuellen Sicherheitstokens zuverlässig zu schützen. Es können daher auch sicherheitskritische Funktionen, z.B. Ver- oder Entschlüsselungsfunktionen oder Authentisierungsfunktionen, vom virtuellen Sicherheitstoken übernommen werden.

Aus Gründen der Sicherheit wird in manchen Ausgestaltungen der Virtualisierungsvorgang bei jedem Hochfahren des Host-Systems ausgeführt, wobei jeweils das physische Sicherheitstoken zwingend benötigt wird.

Während in vielen Ausgestaltungen eine 1:1-Beziehung zwischen dem physischen und dem virtuellen Sicherheitstoken besteht, sind auch Ausführungsformen vorgesehen, bei denen aus mehreren physischen Sicherheitstoken ein einziges virtuelles Sicherheitstoken erzeugt wird oder aus einem einzigen physischen Sicherheitstoken mehrere virtuelle Sicherheitstoken erzeugt werden.

Das erfindungsgemäße Host-System ist in manchen Ausgestaltungen mit Merkmalen weitergebildet, die den oben beschriebenen und/oder den in den abhängigen Verfahrensansprüchen genannten Merkmalen entsprechen.

Weitere Merkmale, Vorteile und Aufgaben der Erfindung gehen aus der folgenden genauen Beschreibung von Ausführungsbeispielen hervor. In den schematischen Zeichnungen zeigen:
Fig. 1 ein Blockdiagramm eines Host-Systems und eines Sicherheitstokens in einem Ausführungsbeispiel der Erfindung,
Fig. 2 eine Darstellung logischer Strukturen in dem in Fig. 1 gezeigten Ausführungsbeispiel, und
Fig. 3 ein Ablaufdiagramm eines Virtualisierungsvorgangs in einem Anwendungsbeispiel der Erfindung.

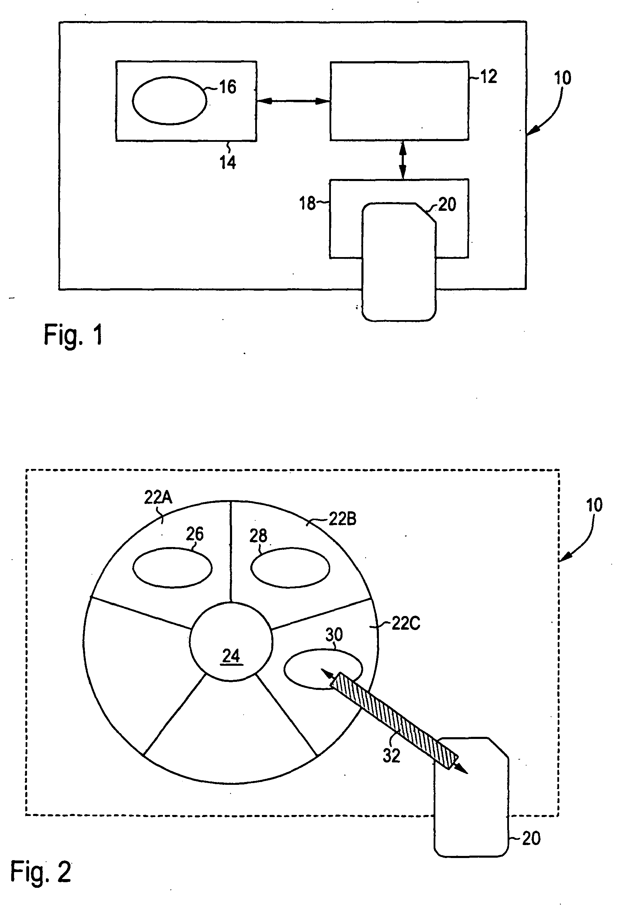

In der schematischen Darstellung von Fig. 1 sind als Bestandteile des Host-Systems 10 ein Prozessor 12 und ein Speicher 14 mit einem Betriebssystem 16 gezeigt. Das Host-System 10 kann beispielsweise ein portables Gerät - z.B. ein mobiles Telekommunikationsgerät - oder ein üblicher Computer oder ein eingebettetes Gerät - z.B. ein Zugangsberechtigungssystem - sein. Es versteht sich, dass das Host-System 10 je nach seiner genauen Ausgestaltung weitere Komponenten - z.B. eine Stromversorgung, einer Tastatur und eine Anzeige - aufweist, die jedoch in Fig. 1 aus Gründen der klareren Darstellung nicht gezeigt sind.

Das Host-System 10 weist ferner eine Schnittstelle 18 auf, über die ein Sicherheitstoken 20 mit dem Host-System 10 verbunden ist. Das Sicherheitstoken 20 ist beispielsweise eine Chipkarte oder ein Chipmodul. Die Schnittstelle 18 ist an das Sicherheitstoken 20 angepasst; beispielsweise kann die Schnittstelle 18 nach einer für Chipkarten üblichen Norm - z.B. ISO/IEC 7816 oder GSM 11.11 - oder als USB-Schnittstelle oder als Schnittstelle für eine Speicherkarte - z.B. eine SD-, MMC- oder SMMC-Karte - ausgestaltet sein. Das Sicherheitstoken 20 enthält in üblicher Weise einen Prozessor und einen Speicher mit Betriebssystem sowie weitere Bauelemente; diese Bestandteile sind jedoch in Fig. 1 aus Gründen der klareren Darstellung nicht gezeigt.

Das Betriebssystem 16 des Host-Systems 10 ist ein multitasking-fähiges Sicherheits-Betriebssystem, das es ermöglicht, im Host-System 10 Prozesse in jeweils eigenen, voneinander getrennten Bereichen auszuführen. Diese Bereiche sind in Fig. 2 mit den Bezugszeichen 22A, 22B, 22C gezeigt und werden im folgenden zusammenfassend als Bereiche 22x bezeichnet. Das Betriebssystem 16 partitioniert die Ressourcen des Host-Systems 10 - z.B. Speicherplatz im Speicher 14 und Rechenzeit des Prozessors 12 - in die Bereiche 22x, so dass die Bereiche 22x sicher voneinander abgeschottet sind und auch kein unerlaubter Zugriff von außen auf einen der Bereiche 22x möglich ist. Dies ermöglicht es, sicherheitskritische Daten, z.B. kryptographische Schlüssel, in den Bereichen 22x abzulegen und zu verarbeiten.

Wie in Fig. 2 gezeigt, stellt während des Betriebs des Host-Systems 10 ein Betriebssystemkern 24 wesentliche Grundfunktionen bereit. Weitere Betriebssystemfunktionen werden in mindestens einem für Betriebssystemdienste 26 reservierten Bereich - hier z.B. dem Bereich 22A - ausgeführt. Der Betriebssystemkern 24 ist in manchen Ausgestaltungen ein Mikrokernel wie beispielsweise der unter dem Namen L4 bekannte Mikrokernel, der in dem Artikel "Toward Real Microkernels" von Jochen Liedtke, Communications of the ACM, Vol. 39, No. 9,1996, Seiten 70 - 77, beschrieben ist. Ein solcher Mikrokernel kann eine besonders sichere Abschottung von Betriebssystemprozessen erreichen. Die Erfindung ist jedoch nicht auf Microkernel-Betriebssysteme beschränkt.

Der Bereich 22B in Fig. 2 dient zur Ausführung eines Anwendungsprogramms 28 des Host-Systems 10. Es versteht sich, dass das Host-System 10 weitere Anwendungsprogramme - im Bereich 22B oder in weiteren Bereichen - aufweisen kann.

Im Bereich 22C wird beim Starten des Host-Systems 10 und Hochfahren (Booten) des Betriebssystems 16 ein Virtualisierungsvorgang ausgeführt, bei dem ein virtuelles Sicherheitstoken 30 angelegt wird. Hierzu wird das physische Sicherheitstoken 20 zwingend benötigt. Beim Virtualisierungsvorgang wird ein kryptographisch gesicherter Kommunikationskanal 32 zwischen dem physischen Sicherheitstoken 20 und dem Prozess, der das virtuelle Sicherheitstoken 30 anlegt, aufgebaut. Beispielsweise kann eine gegenseitige Authentisierung erfolgen, in deren Verlauf die Sicherheitsparameter für eine verschlüsselte Verbindung - z.B. ein symmetrischer Sitzungsschlüssel - vereinbart werden. Diese Sicherheitsparameter sind nur dem physischen Sicherheitstoken 20 sowie dem Prozess, der das virtuelle Sicherheitstoken 30 anlegt, bekannt.

Da der kryptographisch gesicherte Kommunikationskanal 32 weder für andere Prozesse im Host-System 10 noch für einen externen Angreifer zugänglich ist, können alle - auch streng vertrauliche - Informationen vom physischen Sicherheitstoken 20 zum virtuellen Sicherheitstoken 30 übertragen werden. Dies macht es möglich, dass das virtuelle Sicherheitstoken 30 während des weiteren Betriebs alle Funktionen des physischen Sicherheitstokens 20 übernimmt. Es findet daher eine "vollständige Virtualisierung des Sicherheitstokens" statt.

Nach Abschluss des Virtualisierungsvorgangs ist das physische Sicherheitstoken 20 nicht mehr erforderlich. Es kann abgeschaltet und/ oder entfernt werden. Durch das Abschalten des physichen Sicherheitstokens 20 wird der Stromverbrauch reduziert. Wenn das physische Sicherheitstoken 20 entfernt wird, so können die Schnittstelle 18 und/oder der vom Sicherheitstoken 20 eingenommene Platz für andere Zwecke genutzt werden.

Das virtuelle Sicherheitstoken 30 wird durch einen Prozess implementiert, der im Bereich 22C abläuft und auf ebenfalls im Bereich 22C gespeicherte Daten zugreift. Das Betriebssystem 16 stellt hierbei sicher, dass dem Bereich 22C ein fester, abgeschotteter Speicher und ein garantiertes Kontingent an Rechenzeit zur Verfügung steht. Der Speicherschutz verhindert einen unberechtigten Zugriff anderer Prozesse auf die Daten des virtuellen Sicherheitstokens 30, während das Kontingent an Rechenzeit die Verfügbarkeit des virtuellen Sicherheitstokens 30 im Host-System 10 sicherstellt.

Beim Abschalten oder Herunterfahren des Host-Systems 10 wird im vorliegenden Ausführungsbeispiel das virtuelle Sicherheitstoken 30 gelöscht, so dass beim nächsten Start das physische Sicherheitstoken 20 erneut benötigt wird.

Insgesamt wird bei dem hier beschriebenen System eine Ende-zu-Ende Sicherheit zwischen dem physischen Sicherheitstoken 20 und dem Host-System 10 erreicht. Mit anderen Worten liegen geheim zu haltende Daten nur innerhalb des physischen Sicherheitstokens 20 und innerhalb des gesicherten Bereichs 22C im Klartext vor. Da hohe Anforderungen an die Sicherheit des Betriebssystems 16 und die Abschottung des Bereichs 22C gestellt werden, weist das Host-System 10 in manchen Ausgestaltungen ein TPM (*Trusted Platform Module*) auf, das zur Absicherung des Betriebssystems 16 dient. In weiteren Ausführungsformen wird die Rolle des TPM von dem physischen Sicherheitstoken 20 übernommen, solange dieses an das Host-System 10 angeschlossen ist. Es sind jedoch auch Ausgestaltungen vorgesehen, bei denen keine spezielle Absicherungshardware im Host-System 10 verwendet wird.

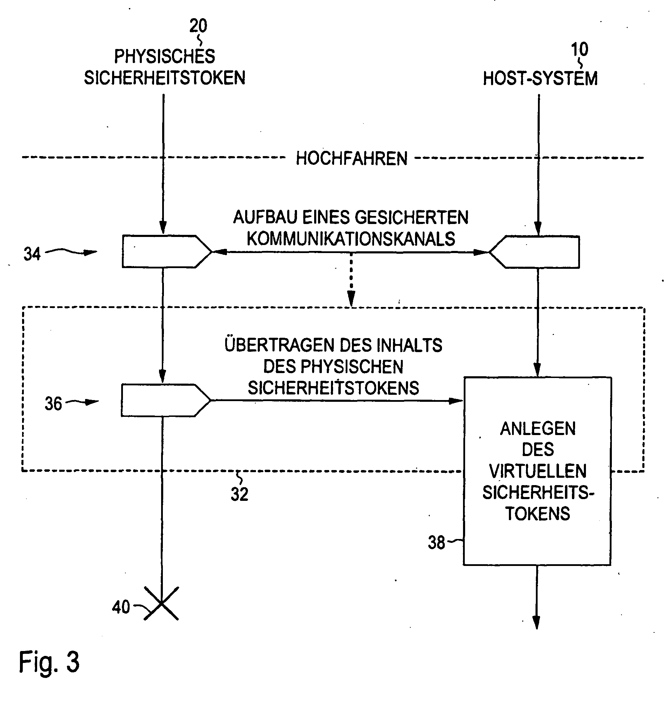

Fig. 3 zeigt die Virtualisierung des physischen Sicherheitstokens 20 in einem Anwendungsbeispiel, bei dem das Sicherheitstoken 20 eine SIM- oder USIM-Karte und das Host-System 10 ein Mobiltelefon ist. Hinsichtlich seiner Bauform kann das Sicherheitstoken 20 beispielsweise eine SMMC-Karte (*Secure Multi-Media Card*) sein, und entsprechend ist die Schnittstelle 18 des Host-Systems 10 als MMC-Steckplatz ausgestaltet. Die Darstellung von Fig. 3 ist nicht auf das gerade genannte Anwendungsbeispiel beschränkt, sondern trifft auf viele Ausgestaltungen der Erfindung zu. Beispielsweise kann das Host-System 10 ein Produktionssystem oder ein Zertifizierungssystem oder ein sonstiges System sein, das Chipkarten als physische Sicherheitstoken verwendet.

Der in Fig. 3 gezeigte Virtualisierungsvorgang wird durch das Einschalten und Hochfahren des Host-Systems 10 ausgelöst. Zu diesem Zeitpunkt muss das physische Sicherheitstoken 20 präsent sein, also im vorliegenden Beispiel die SMMC-Karte in den MMC-Steckplatz des Mobiltelefons eingesteckt sein. In Ausführungsalternativen können - alternativ oder zusätzlich - andere Auslöseereignisse für den Virtualisierungsvorgang vorgesehen sein.

Es wird nun in einem Aufbauvorgang 34 der gesicherte Kommunikationskanal 32 aufgebaut, wozu beispielsweise eine Challenge-Response-Authentisierung mit Schlüsselaushandlung durchgeführt wird. Hierzu können an sich bekannte kryptographische Verfahren, wie z.B. Verfahren gemäß den Secure Messaging oder SSL/TLS-Protokollen, verwendet werden.

Die benötigten Inhalte - z.B. Schlüssel und Daten - des physischen Sicherheitstokens 20 werden nun in einem Übertragungsvorgang 36 vom physischen Sicherheitstoken 20 in den gesicherten Bereich 22C des Host-Systems 10 übertragen. Diese Inhalte werden dann in einem Anlegevorgang 38 verwendet, um das virtuelle Sicherheitstoken 30 im Bereich 22C anzulegen. Der Anlegevorgang 38 kann in manchen Ausgestaltungen nach Abschluss des Übertragungsvorgangs 36 ausgeführt werden. In der Regel überlappen sich jedoch der Übertragungsvorgang 36 und der Anlegevorgang 38 ganz oder teilweise und werden parallel oder ineinander verzahnt (*interleaved*) ausgeführt, wie in Fig. 3 gezeigt.

Nach der Initialisierung des virtuellen Sicherheitstokens 30 im Host-System 10 sind der Anlegevorgang 38 und damit der gesamte Virtualisierungsvorgang abgeschlossen. Das Verhalten des physischen Sicherheitstokens 20 wird nun durch das virtuelle Sicherheitstoken 30 emuliert. Alle Anfragen während des weiteren Betriebs des Host-Systems 10, die z.B. vom Anwendungsprogramm 28 stammen, werden an das virtuelle Sicherheitstoken 30 gerichtet und von diesem beantwortet. Die Kommunikation erfolgt dabei gemäß denselben Normen, die auch für das physische Sicherheitstoken 20 einschlägig wären, also z.B. ESTI- oder ISO/IEC-7816-Normen.

Das physische Sicherheitstoken 20 wird nun nicht mehr benötigt. Es wird in Schritt 40 abgeschaltet, also von der Stromversorgung des Host-Systems 10 getrennt. Nun kann das physische Sicherheitstoken 20 aus der Schnittstelle 18 entfernt werden. Im vorliegenden Beispiel wird dadurch der MMC-Steckplatz des Mobiltelefons frei. Dieser Steckplatz kann dann z.B. für "normale" MMC-Speicherkarten verwendet werden. In manchen Ausgestaltungen kann das Betriebssystem 16 des Host-Systems 10 über die weiteren Verwendungsmöglichkeiten der Schnittstelle 18 entscheiden. Beispielsweise kann vorgesehen sein, dass nur Speicherkarten eines bestimmten Systembetreibers akzeptiert werden.

Bei dem gerade beschriebenen Ausführungsbeispiel wurde ein einziges physisches Sicherheitstoken 20 zu einem einzigen virtuellen Sicherheitstoken 30 umgesetzt. Eine solche 1:1-Zuordnung ist jedoch in manchen Ausgestaltungen nicht zwingend. Es sind vielmehr Ausführungsformen vorgesehen, in denen ein virtuelles Sicherheitstoken aus mehreren physischen Sicherheitstoken erzeugt wird und umgekehrt.

Ein Anwendungsbeispiel für die Verwendung mehrerer physischen Sicherheitstoken 20 ist eine Zertifizierungsstelle, die z.B. X.509-Zertifikate ausstellt. Bei einer solchen Zertifizierungsstelle kann das Host-System 10 eine Signatureinheit sein, die mit einer "virtuellen Chipkarte" als virtuellem Sicherheitstoken 30 arbeitet. In manchen Ausgestaltungen kann vorgesehen sein, dass zur Erzeugung des virtuellen Sicherheitstokens 30 mehrere physische Sicherheitstoken 20, die unterschiedlichen Benutzern gehören, angefordert werden. Durch diese Maßnahme wird eine besonders hohe Gesamtsicherheit der Zertifizierungsstelle erreicht.

Ein weiteres Anwendungsbeispiel ergibt sich bei einem physischen Sicherheitstoken 20, das mehrere Funktionen in sich vereinigt. Beispielsweise kann eine Chipkarte sowohl als SIM für Mobilkommunikationsdienste als auch als Entschlüsselungskarte für digitales Fernsehen ausgestaltet sein. Wegen des beschränkten Datendurchsatzes durch die Schnittstelle der Chipkarte und/oder der beschränkten Rechenleistung ist möglicherweise die Nutzung dieser Funktionen nicht gleichzeitig möglich. Hier kann eine Virtualisierung Abhilfe schaffen, wenn im Host-System 10 mehr Rechenleistung für das virtuelle Sicherheitstoken 30 und/oder eine höhere Kommunkationsbandbreite zwischen dem virtuellen Sicherheitstoken 30 und den Anwendungsprogrammen - z.B. 28 - zur Verfügung steht. In unterschiedlichen Ausgestaltungen kann das physische Sicherheitstoken 20 in ein einziges oder mehrere virtuelle Sicherheitstoken 30 umgesetzt werden.

## Patentansprüche

1. Verfahren zum Bereitstellen einer Funktion eines physischen Sicherheitstokens (20) in einem Host-System (10), wobei in einem Virtualisierungsvorgang (34, 36, 38) unter Zugriff auf das physische Sicherheitstoken (20) ein virtuelles Sicherheitstoken (30) angelegt wird, so dass nach Abschluss des Virtualisierungsvorgangs (34, 36, 38) das virtuelle Sicherheitstoken (30) - ohne Rückgriff auf das physische Sicherheitstoken (20) - die Funktion bereitstellt, die an sich das physische Sicherheitstoken (20) bereitstellt,
**dadurch gekennzeichnet, dass**
ein Betriebssystem des Host-Systems (10) ein multitasking-fähiges Sicherheits-Betriebssystem ist, das es ermöglicht, im Host-System (10) Prozesse in jeweils eigenen, voneinander getrennten Bereichen (22A, 22B, 22C) auszuführen,
in dem Schritt des Anlegens des virtuellen Sicherheitstoken Daten, die zum Bereitstellen der Funktion erforderlich sind, über einen kryptographisch gesicherten Kommunikationskanal (32) von dem physischen Sicherheitstoken (20) zu dem Host-System (10) übertragen werden und das virtuelle Sicherheitstoken (30) in einem durch das Betriebssystem gesicherten Bereich (22C) des Host-Systems (10) angelegt wird.

2. Verfahren nach Anspruch 1, **dadurch gekennzeichnet, dass** der Virtualisierüngsvorgang (34, 36, 38) zumindest bei jedem Hochfahren des Host-Systems (10) ausgeführt wird.

3. Verfahren nach Anspruch 1 oder Anspruch 2, **dadurch gekennzeichnet, dass** das physische Sicherheitstoken (20) nach Abschluss des Virtualisierungsvorgangs (34, 36, 38) abgeschaltet wird.

4. Verfahren nach einem der Ansprüche 1 bis 3, **dadurch gekennzeichnet, dass** das physische Sicherheitstoken (20) nach Abschluss des Virtualisierungsvorgangs (34,36,38) von dem Host-System (10) trennbar ist.

5. Verfahren nach einem der Ansprüche 1 bis 4, **dadurch gekennzeichnet, dass** die bereitgestellte Funktion eine Funktion ist, zu deren Ausführung geheime Daten benötigt werden, die im physischen Sicherheitstoken (20) enthalten sind und die im Zuge des Virtualisierungsvorgangs (34, 36, 38) in das Host-System (10) übertragen werden.

6. Verfahren nach einem der Ansprüche 1 bis 5, **dadurch gekennzeichnet, dass** die bereitgestellte Funktion eine kryptographische Funktion, beispielsweise eine Ver- oder Entschlüsselungsfunktion oder eine Authentisierungsfunktion, ist.

7. Verfahren nach einem der Ansprüche 1 bis 6, **dadurch gekennzeichnet, dass** der Virtualisierungsvorgang (34, 36, 38) einen Aufbauvorgang (34) zum Aufbau des gesicherten Kommunikationskanals (32), einen Übertragungsvorgang (36) zum Übertragen der zum Bereitstellen der Funktion erforderlichen Daten und einen Anlegevorgang (38) zum Anlegen des virtuellen Sicherheitstokens (30) aufweist.

8. Verfahren nach einem der Ansprüche 1 bis 7, **dadurch gekennzeichnet, dass** das physische Sicherheitstoken (20) eine Chipkarte oder ein Chipmodul ist.

9. Verfahren nach einem der Ansprüche 1 bis 8, **dadurch gekennzeichnet, dass** das physische Sicherheitstoken (20) ein SIM oder ein USIM ist, und dass das Host-System (10) ein Telekommunikationsgerät ist.

10. Verfahren nach einem der Ansprüche 1 bis 9, **dadurch gekennzeichnet, dass** bei dem Virtualisierungsvorgang (34, 36, 38) aus mehreren physischen Sicherheitstoken, umfassend den physischen Sicherheitstoken (20), das virtuelle Sicherheitstoken (30), als ein einziges virtuelles Sicherheitstoken (30), erzeugt wird.

11. Verfahren nach einem der Ansprüche 1 bis 9, **dadurch gekennzeichnet, dass** bei dem Virtualisierungsvorgang (34, 36, 38) aus dem physischen Sicherheitstoken (20), als einem einzigen physischen Sicherheitstoken (20), mehrere virtuelle Sicherheitstoken, umfassend den virtuellen Sicherheitstoken (30), erzeugt werden.

12. Host-System (10) mit einem Prozessor (12) und einem Speicher (14), das dazu eingerichtet ist, alle Schritte eines Verfahrens nach einem der Ansprüche 1 bis 11 auszuführen.

## Claims

1. A method for providing a function of a physical security token (20) in a host system (10), whereby a virtual security token (30) is created in a virtualization process (34, 36, 38) by accessing the physical security token (20), so that after completion of the virtualization process (34, 36, 38) the virtual security token (30) - without recourse to the physical security token (20) - provides the function basically provided by the physical security token (20),
**characterized in that**
an operating system of the host system (10) is a multitasking-capable security operating system which makes it possible to execute processes in the host system (10) in their own respective, mutually separate areas (22A, 22B, 22C),
in the step of creating the virtual security token, data necessary for providing the function are transferred from the physical security token (20) to the host system (10) via a cryptographically secured communication channel (32), and the virtual security token (30) is created in an area (22C) of the host system (10) that is secured by the operating system.

2. The method according to claim 1, **characterized in that** the virtualization process (34, 36, 38) is executed at least at each booting of the host system (10).

3. The method according to claim 1 or claim 2, **characterized in that** the physical security token (20) is switched off after completion of the virtualization process (34, 36, 38).

4. The method according to any of claims 1 to 3, **characterized in that** the physical security token (20) is separable from the host system (10) after completion of the virtualization process (34, 36, 38).

5. The method according to any of claims 1 to 4, **characterized in that** the provided function is a function for whose execution secret data are required which are contained in the physical security token (20) and which are transferred to the host system (10) in the course of the virtualization process (34, 36, 38).

6. The method according to any of claims 1 to 5, **characterized in that** the provided function is a cryptographic function, for example an encryption or decryption function or an authentication function.

7. The method according to any of claims 1 to 6, **characterized in that** the virtualization process (34, 36, 38) has a set-up process (34) for setting up the secured communication channel (32), a transfer process (36) for transferring the data necessary for providing the function, and a creation process (38) for creating the virtual security token (30).

8. The method according to any of claims 1 to 7, **characterized in that** the physical security token (20) is a chip card or a chip module.

9. The method according to any of claims 1 to 8, **characterized in that** the physical security token (20) is a SIM or a USIM, and that the host system (10) is a telecommunication device.

10. The method according to any of claims 1 to 9, **characterized in that** in the virtualization process (34, 36, 38) the virtual security token (39) is generated, as a single virtual security token (30), from several physical security tokens, comprising the physical security token (20).

11. The method according to any of claims 1 to 9, **characterized in that** in the virtualization process (34, 36, 38) several virtual security tokens, comprising the virtual security token (30), are generated from the physical security token (20), as a single physical security token (20).

12. A host system (10) having a processor (12) and a memory (14), said system being adapted to execute all steps of a method according to any of claims 1 to 11.

## Revendications

1. Procédé de mise à disposition d'une fonction d'un jeton physique de sécurité (20) dans un système hôte (10), un jeton virtuel de sécurité (30) étant créé en ayant accès au jeton physique de sécurité (20) lors d'une opération de virtualisation (34, 36, 38), de telle sorte que, après achèvement de l'opération de virtualisation (34, 36, 38), le jeton virtuel de sécurité (30) met à disposition sans avoir recours au jeton physique de sécurité (20) la fonction que le jeton physique de sécurité (20) met en soi à disposition,
**caractérisé en ce que**
un système d'exploitation du système hôte (10) est un système d'exploitation de sécurité pouvant être multitâche et qui permet d'exécuter dans le système hôte (10) des processus dans des zones (22A, 22B, 22C) respectivement propres, séparées les unes des autres,
**en ce que** des données nécessaires à la mise à disposition de la fonction sont transmises lors de l'étape de la création du jeton virtuel de sécurité par le jeton physique de sécurité (20) au système hôte (10) par l'intermédiaire d'un canal de communication (32) sécurisé cryptographiquement, et **en ce que** le jeton virtuel de sécurité (30) est créé dans une zone (22C) du système hôte (10) sécurisée par le système d'exploitation.

2. Procédé selon la revendication 1, **caractérisé en ce que** l'opération de virtualisation (34, 36, 38) est exécutée au moins à chaque mise en marche du système hôte (10).

3. Procédé selon la revendication 1 ou selon la revendication 2, **caractérisé en ce que** le jeton physique de sécurité (20) est déconnecté après achèvement de l'opération de virtualisation (34, 36, 38).

4. Procédé selon une des revendications de 1 à 3, **caractérisé en ce que** le jeton physique de sécurité (20) est séparable du système hôte (10) après achèvement de l'opération de virtualisation (34, 36, 38).

5. Procédé selon une des revendications de 1 à 4, **caractérisé en ce que** la fonction de mise à disposition est une fonction dont l'exécution nécessite des données secrètes qui sont contenues dans le jeton physique de sécurité (20) et qui sont tranmises dans le système hôte (10) au cours de l'opération de virtualisation (34, 36, 38).

6. Procédé selon une des revendications de 1 à 5, **caractérisé en ce que** la fonction de mise à disposition est une fonction cryptographique, par exemple une fonction de chiffrement ou de déchiffrement ou bien une fonction d'authentification.

7. Procédé selon une des revendications de 1 à 6, **caractérisé en ce que** l'opération de virtualisation (34, 36, 38) comporte une opération de mise en place (34) pour la mise en place du canal de communication (32) sécurisé, une opération de transmission (36) pour la transmission des données nécessaires à la mise à disposition de la fonction, et une opération de création (38) pour la création du jeton virtuel de sécurité (30).

8. Procédé selon une des revendications de 1 à 7, **caractérisé en ce que** le jeton physique de sécurité (20) est une carte à puce ou un module puce.

9. Procédé selon une des revendications de 1 à 8, **caractérisé en ce que** le jeton physique de sécurité (20) est un SIM ou un USIM, et que le système hôte (10) est un appareil de télécommunication.

10. Procédé selon une des revendications de 1 à 9, **caractérisé en ce que**, lors de l'opération de virtualisation (34, 36, 38), le jeton virtuel de sécurité (30) est généré, en tant qu'un unique jeton virtuel de sécurité (30), à partir de plusieurs jetons physique de sécurité comprenant le jeton physique de sécurité (20).

11. Procédé selon une des revendications de 1 à 9, **caractérisé en ce que** lors de l'opération de virtualisation (34, 36, 38), plusieurs jetons virtuels de sécurité comprenant le jeton virtuel de sécurité (30) sont générés à partir du jeton physique de sécurité (20) en tant qu'un unique jeton physique de sécurité (20).

12. Système hôte (10) comportant un processeur (12) et une mémoire (14), qui est configuré pour exécuter toutes les étapes d'un procédé selon une des revendications de 1 à 11.
